# EUROPÄISCHE PATENTSCHRIFT

(11) **EP 4 609 106 B1**
(45) Veröffentlichungstag und Bekanntmachung des Hinweises auf die Patenterteilung: **02.12.2026**
(21) Anmeldenummer: 23798880.3
(22) Anmeldetag: 24.10.2023
(51) Int. Cl.: F17C 3/08

(54) **SPEICHERBEHÄLTER**
STORAGE CONTAINER
RÉCIPIENT DE STOCKAGE

(30) Priorität: 26.10.2022 EP 22020519
(43) Veröffentlichungstag der Anmeldung: 03.09.2025
(73) Patentinhaber: Linde GmbH, 82049 Pullach (DE)
(72) Erfinder: FELBINGER, Stefan, 82049 Pullach (DE); TONEVA, Petya, 82049 Pullach (DE); HAKEMI, Nabeel, 82049 Pullach (DE); SCHAFRANEK, Johannes, 82049 Pullach (DE); POSSELT, Heinz, 82049 Pullach (DE); ZENZ, Harald, 82049 Pullach (DE); MÜLLER, Eva, 82049 Pullach (DE); DURNEV, Denis, 82049 Pullach (DE); WOLFERSTETTER, Clemens, 82049 Pullach (DE); WELLENHOFER, Anton, 82049 Pullach (DE)
(74) Vertreter: Meilinger, Claudia Sabine
(86) Internationale Anmeldenummer: PCT/EP2023/025445
(87) Internationale Veröffentlichungsnummer: WO 2024/088561

(56) Entgegenhaltungen:
- DE-A1- 102019 129 740
- GB-A- 705 217
- US-A- 3 059 804
- US-A- 3 613 934
- US-A- 4 516 404
- US-B1- 6 336 332

## Beschreibung

Die Erfindung betrifft einen Speicherbehälter zum Speichern eines Kryogens.

Speicherbehälter für flüssigen Wasserstoff können gemäß betriebsinternen Erkenntnissen eine Heizeinrichtung aufweisen, welche es ermöglicht, innerhalb des Speicherbehälters einen vorgegebenen Druck aufzubauen. Derartige Speicherbehälter sind im Wesentlichen zylinderförmig oder tonnenförmig und umfassen einen Innenbehälter zum Aufnehmen des Wasserstoffs sowie einen Außenbehälter, der den Innenbehälter umschließt. Zwischen dem Innenbehälter und dem Außenbehälter ist ein mit einem Vakuum beaufschlagter Vakuumraum vorgesehen.

US 6 336 332 B1 offenbart einen Speichertank zur Speicherung von superkritischem, tiefkaltem Helium. Der doppelwandige, vakuumisolierte Speichertank umfasst zur Regelung des Speicherdrucks neben einer elektrischen Heizeinrichtung eine Einrichtung zur Zuführung von Heliumgas in eine Wärmekammer, die sich bis in den Innenraum des Speichertanks hinein erstreckt. Im Falle eines Ausfalls der elektrischen Heizeinrichtung kann der Speicherdruck über die Zufuhr von Heliumgas in die Wärmekammer geregelt werden. US 6 336 332 B1 bildet den Oberbegriff von Anspruch 1.

Die Aufgabe der vorliegenden Erfindung besteht darin, einen verbesserten Speicherbehälter zur Verfügung zu stellen.

Demgemäß wird ein Speicherbehälter zum Speichern eines Kryogens vorgeschlagen. Der Speicherbehälter umfasst einen Innenbehälter zum Aufnehmen des Kryogens, einen Außenbehälter, der den Innenbehälter umschließt, einem Vakuumraum, der zwischen dem Innenbehälter und dem Außenbehälter vorgesehen ist, und eine Heizeinrichtung zum Druckaufbau innerhalb des Innenbehälters durch Einbringen von Wärme in das Kryogen, wobei die Heizeinrichtung eine Außenhülle aufweist, die durch den Vakuumraum bis in den Innenbehälter geführt ist, und wobei ein von der Außenhülle umschlossener Innenraum der Heizeinrichtung fluidisch von dem Vakuumraum getrennt ist, und wobei die Heizeinrichtung eine Heizeinheit zum Einbringen der Wärme in das Kryogen aufweist.

Erfindungsgemäß weist die Heizeinrichtung einen Längenkompensator auf, der dazu eingerichtet ist, eine wärmebedingte Längenänderung des Innenbehälters zu kompensieren.

Erfindungsgemäß weist die Heizeinrichtung des Weiteren ein stabförmiges Verbindungsstück auf, wobei die Heizeinheit und das Verbindungsstück innerhalb der Außenhülle angeordnet sind, wobei das Verbindungsstück an einem Endabschnitt die Heizeinheit trägt, und wobei die Heizeinheit ein Heizelement umfasst, das von einem Trägerelement getragen wird. Dadurch, dass der Längenkompensator vorgesehen ist, kann die wärmebedingte Längenänderung des Innenbehälters derart kompensiert werden, dass bei einem Einfüllen des Kryogens in den Innenbehälter durch eine wärmebedingte Schrumpfung des Innenbehälters keine Spannungen in die Heizeinrichtung, den Innenbehälter und/oder den Außenbehälter eingebracht werden. Die von dem Verbindungsstück getragene Heizeinheit, die ihrerseits ein von einem Trägerelement getragenes Heizelement umfasst, kann leicht ausgetauscht werden.

Insbesondere ist der Längenkompensator dazu eingerichtet, die wärmebedingte Längenänderung des Innenbehälters entlang einer Längsrichtung des Speicherbehälters zu kompensieren. Es kann zusätzlich auch eine Längenänderung in einer Radialrichtung des Speicherbehälters kompensiert werden. Dies ist jedoch optional.

Das Kryogen ist vorzugweise Wasserstoff. Die Begriffe "Kryogen" und "Wasserstoff" können daher beliebig gegeneinander getauscht werden. Grundsätzlich kann das Kryogen jedoch auch ein beliebiges anderes Kryogen sein. Beispiele für Kryoflüssigkeiten, kryogene Fluide oder Flüssigkeiten, oder kurz Kryogene, sind neben dem zuvor erwähnten Wasserstoff flüssiges Helium, flüssiger Stickstoff oder flüssiger Sauerstoff. Unter einem "Kryogen" ist somit insbesondere eine Flüssigkeit zu verstehen. Das Kryogen kann daher auch als Kryoflüssigkeit bezeichnet werden.

Das Kryogen kann verdampft und so in eine gasförmige Phase überführt werden. Nach dem Verdampfen ist das Kryogen ein Gas oder kann als gasförmiges oder verdampftes Kryogen bezeichnet werden. Der Begriff "Kryogen" kann somit beides, nämlich die Gasphase und die Flüssigphase, umfassen. Wie zuvor erwähnt, kann die Flüssigphase auch als Kryoflüssigkeit bezeichnet werden. Der Begriff "verdampftes Kryogen" bezieht sich vorliegend bevorzugt nur auf die Gasphase des Kryogens.

In dem Speicherbehälter, insbesondere in dem Innenbehälter des Speicherbehälters, bilden sich nach oder bei dem Einfüllen des Kryogens in den Speicherbehälter eine Gaszone sowie eine darunterliegende Flüssigkeitszone. Zwischen der Gaszone und der Flüssigkeitszone ist eine Phasengrenze vorgesehen. Die Heizeinrichtung ist insbesondere zumindest abschnittsweise innerhalb des Innenbehälters, insbesondere in der Flüssigkeitszone, angeordnet.

Das Kryogen weist also nach dem Einfüllen in den Speicherbehälter vorzugsweise zwei Phasen mit unterschiedlichen Aggregatszuständen, nämlich flüssig und gasförmig, auf. Die flüssige Phase kann in die gasförmige Phase und umgekehrt übergehen. Die flüssige Phase kann als Flüssigphase bezeichnet werden. Die gasförmige Phase kann als Gasphase bezeichnet werden. Auch eine rein flüssige Befüllung des Speicherbehälters ist möglich.

Ein in dem Speicherbehälter herrschender Druck liegt bevorzugt bei etwa 3,5 bara. Der in dem Speicherbehälter herrschende Druck ist insbesondere konstant. Der Speicherbehälter ist insbesondere geeignet, einem Verbraucher die gasförmige Phase oder die flüssige Phase des Kryogens mit einem geeigneten Versorgungsdruck und einer geeigneten Temperatur zuzuführen. Der Verbraucher kann eine Brennstoffzelle sein. Unter einer "Brennstoffzelle" ist vorliegend insbesondere eine galvanische Zelle zu verstehen, welche die chemische Reaktionsenergie eines kontinuierlich zugeführten Brennstoffs, vorliegend Wasserstoff, und eines Oxidationsmittels, vorliegend Sauerstoff, in elektrische Energie wandelt.

Das Kryogen wird dem Verbraucher selbst insbesondere in gasförmiger Form zugeführt. Das heißt, das Kryogen wird vor dem Verbraucher oder stromaufwärts des Verbrauchers vollständig verdampft beziehungsweise erwärmt, wenn eine direkte Zufuhr der gasförmigen Phase aus dem Speicherbehälter erfolgt. Beispielsweise wird das Kryogen dem Verbraucher mit einem Versorgungsdruck von 1 bis 2,5 bara und einer Temperatur von +10 °C bis +25 °C zugeführt. Der Versorgungsdruck kann jedoch auch bis zu 6 bara betragen.

Dem Speicherbehälter ist vorzugsweise eine Symmetrie- oder Mittelachse zugeordnet, zu der der Speicherbehälter im Wesentlichen rotationssymmetrisch aufgebaut ist. Der Speicherbehälter kann somit im Querschnitt einen kreisförmigen oder ringförmigen Querschnitt aufweisen. Davon abweichend kann der Speicherbehälter jedoch im Querschnitt auch oval oder elliptisch sein. Der Innenbehälter und der Außenbehälter sind insbesondere ebenfalls jeweils rotationssymmetrisch zu der Mittelachse aufgebaut.

Der Innenbehälter und der Außenbehälter umfassen jeweils einen rohrförmigen Basisabschnitt, der rotationssymmetrisch zu der Mittelachse aufgebaut ist. Stirnseitig sind der Innenbehälter und der Außenbehälter jeweils mit Hilfe von Deckelabschnitten fluiddicht verschlossen. Der Innenbehälter und der Außenbehälter sind insbesondere fluiddicht. Der Innenbehälter und der Außenbehälter können beispielsweise aus einem metallischen Werkstoff, insbesondere aus Edelstahl, gefertigt sein. Der Innenbehälter ist vollständig innerhalb des Außenbehälters angeordnet. Das heißt insbesondere, dass der Außenbehälter den Innenbehälter vollständig umschließt.

Die Heizeinrichtung kann von einer Umgebung des Speicherbehälters ausgehend durch den Außenbehälter und den Innenbehälter bis in den Innenbehälter, insbesondere bis in die Flüssigkeitszone des Innenbehälters, hineingeführt sein. Die Heizeinrichtung kann hierzu beispielsweise durch die jeweiligen Deckelabschnitte des Innenbehälters und des Außenbehälters hindurchgeführt werden. Insbesondere ist die Heizeinrichtung unterhalb der Phasengrenze in der Flüssigkeitszone platziert, so dass die Heizrichtung stets von der Flüssigphase des Kryogens umgeben oder umspült ist.

Die Heizeinrichtung ist insbesondere dazu eingerichtet, Wärme direkt in die Flüssigphase des Kryogens einzubringen. Zum Einbringen der Wärme umfasst die Heizeinrichtung eine Heizeinheit umfassend ein Heizelement, das von einem Trägerelement getragen wird. Durch das Einbringen von Wärme in das Kryogen verdampft dieses zumindest teilweise, wodurch ein Druckaufbau innerhalb des Speicherbehälters, insbesondere innerhalb des Innenbehälters, erzielt werden kann. Der Speicherbehälter weist vorzugsweise einen Drucksensor zur Messung des Innendrucks des Innenbehälters auf. Damit kann der Druck im Innenbehälter überwacht werden.

Vorzugsweise weist der Speicherbehälter eine Steuereinrichtung auf, die mit dem Drucksensor und mit der Heizeinrichtung in Verbindung steht. Damit besteht die Möglichkeit einer Druckregelung innerhalb des Innenbehälters.

Der Heizeinrichtung ist vorzugsweise eine Symmetrie- oder Mittelachse zugeordnet, zu der die Heizeinrichtung im Wesentlichen rotationssymmetrisch aufgebaut ist. Die Heizeinrichtung kann im Querschnitt kreisförmig oder zylinderförmig sein. Dies schließt jedoch nicht aus, dass die Heizeinrichtung im Querschnitt zumindest teilweise oval oder elliptisch sein kann. Das heißt insbesondere, dass die Heizeinrichtung einen ovalen Querschnitt aufweisen kann.

Bezüglich einer Schwerkraftrichtung betrachtet ist die Mittelachse der Heizeinrichtung unterhalb der Mittelachse des Speicherbehälters platziert. Demgemäß ist die Mittelachse des Speicherbehälters bezüglich der Schwerkraftrichtung oberhalb der Mittelachse der Heizeinrichtung angeordnet. Die Mittelachse der Heizeinrichtung und die Mittelachse des Speicherbehälters sind parallel zueinander und beabstandet voneinander angeordnet.

Bei dem Einfüllen des Kryogens in den Innenbehälter schrumpft der Innenbehälter, der fest mit dem Außenbehälter verbunden sein kann, wärmebedingt entlang der Längsrichtung. Die Längsrichtung ist dabei parallel zu der Mittelachse des Speicherbehälters orientiert. Dadurch, dass der Innenbehälter schrumpft, bewegt sich dieser bezüglich des Außenbehälters um die Längenänderung. Die Längenänderung kann beispielsweise mehrere Millimeter betragen. Diese Längenänderung kann durch den Längenkompensator kompensiert werden.

Unter "kompensieren" ist vorliegend zu verstehen, dass der Längenkompensator zusammengeschoben oder auseinandergezogen wird, so dass weder in die Heizeinrichtung noch in den Innenbehälter noch in den Außenbehälter wärmebedingte Spannungen eingebracht werden. Der Längenkompensator ist somit teleskopierbar. Unter "teleskopierbar" ist vorliegend insbesondere zu verstehen, dass der Längenkompensator zumindest abschnittsweise zusammengeschoben oder zusammengefaltet beziehungsweise auseinandergezogen oder auseinandergefaltet werden kann. Der Längenkompensator ist somit elastisch, insbesondere federelastisch, verformbar.

Erfindungsgemäß weist der Speicherbehälter einen Vakuumraum auf, der zwischen dem Innenbehälter und dem Außenbehälter vorgesehen ist, wobei die Heizeinrichtung eine Außenhülle aufweist, die durch den Vakuumraum bis in den Innenbehälter geführt ist, und wobei ein von der Außenhülle umschlossener Innenraum der Heizeinrichtung fluidisch von dem Vakuumraum getrennt ist.

Wie zuvor erwähnt, ist der Innenbehälter vollständig von dem Außenbehälter umschlossen oder eingekapselt. Zwischen dem Innenbehälter und dem Außenbehälter ist ein Spalt in Form des Vakuumraums vorgesehen. Der Vakuumraum ist evakuiert. Unter einem "Vakuum" ist vorliegend insbesondere ein Druck von weniger als 300 mbar, bevorzugt von weniger als 10⁻³ mbar, weiter bevorzugt von weniger als 10⁻⁷ mbar zu verstehen. Der Speicherbehälter ist somit vakuumisoliert oder vakuumgedämmt. Die Außenhülle ist bevorzugt unterhalb der Phasengrenze bis in den Innenbehälter geführt, so dass die Außenhülle von dem Kryogen umspült wird. Die Außenhülle ist vorzugsweise rohrförmig. Innerhalb der Außenhülle ist die zuvor erwähnte Heizeinheit der Heizeinrichtung angeordnet, welche dazu eingerichtet ist, Wärme in das Kryogen einzubringen. Darunter, dass der von der Außenhülle umschlossene Innenraum "fluidisch" von dem Vakuumraum getrennt ist, ist vorliegend insbesondere zu verstehen, dass zwischen dem Innenraum der Heizeinrichtung und dem Vakuumraum keine Fluidverbindung besteht. Das heißt insbesondere, dass der von der Außenhülle umschlossene Innenraum der Heizeinrichtung nicht in Fluidverbindung mit dem Vakuumraum steht.

Gemäß einer weiteren Ausführungsform ist der Innenraum mit einem wärmeleitenden Medium gefüllt.

Das wärmeleitende Medium kann ein Gas sein. Die Begriffe "Medium" und "Gas" können daher beliebig gegeneinander getauscht werden. Das wärmeleitende Medium kann auch eine Flüssigkeit sein oder aufweisen. Das wärmeleitende Medium kann eine Flüssigphase, eine feste Phase und eine Gasphase aufweisen. Das wärmeleitende Medium kann Teil der Heizeinrichtung sein. Mit Hilfe des wärmeleitenden Mediums wird eine Sicherstellung der Wärmeleitung zwischen der Heizeinheit und der Außenhülle der Heizeinrichtung und somit zwischen der Heizeinheit und der Flüssigphase des Kryogens verwirklicht. Als geeignetes Gas kann beispielsweise ein Inertgas eingesetzt werden. Das wärmeleitende Medium oder Gas kann Helium sein. Insbesondere ist das wärmeleitende Medium derart auszuwählen, dass über einen gesamten Betriebstemperaturbereich des Speicherbehälters kein Phasenwechsel des wärmeleitenden Mediums stattfindet. Insbesondere soll das wärmeleitende Medium nicht einfrieren oder ausfrieren. Alternativ kann auch ein Phasenwechsel des wärmeleitenden Mediums im Betrieb der Heizeinrichtung vorgesehen sein. Dies kann durch eine geeignete Auswahl des wärmeleitenden Mediums verwirklicht werden. Ein Befülldruck und das wärmeleitende Medium werden bevorzugt derart gewählt, dass bei einer minimalen Temperatur und einer maximalen Temperatur, die im Betrieb des Speicherbehälters auftreten können, eine Differenz zu einem Umgebungsdruck der Umgebung und zu einem Betriebsdruck des Speicherbehälters vorhanden ist. Diese zuvor erwähnte Differenz ermöglicht es, eine mögliche Undichtigkeit zwischen der Flüssigkeitszone und dem Innenraum der Außenhülle, zwischen dem Vakuumraum und dem Innenraum der Außenhülle und/oder zwischen der Umgebung und dem Innenraum der Außenhülle sicher detektieren zu können. Für den Fall, dass das Kryogen Wasserstoff ist, ist das wärmeleitende Medium vorzugsweise Helium. Durch die Verwendung von Helium als wärmeleitendes Medium kann bei einem Betrieb des Speicherbehälters mit Wasserstoff ein Ausfrieren des wärmeleitenden Mediums zuverlässig verhindert werden. Als Fülldruck für den Innenraum der Außenhülle wird beispielsweise ein beliebiger Überdruck gewählt, der eine Leckageüberwachung ermöglicht. Bevorzugt wird als Fülldruck ein Druck zwischen 1,1 und 200 bar, insbesondere zwischen 5 und 10 bar, gewählt. Die Überwachung des Innenraums ermöglicht somit eine sicherheitstechnische Leckageüberwachung, um den Anforderungen zur Separierung elektrischer Systeme und Prozesssysteme und zur Separierung zu der Umgebung hin nach einschlägigen Regelwerken gerecht zu werden.

Gemäß einer weiteren Ausführungsform ist die Außenhülle fest mit dem Innenbehälter verbunden.

Insbesondere ist die Außenhülle stoffschlüssig mit dem Innenbehälter verbunden. Bei stoffschlüssigen Verbindungen werden die Verbindungspartner durch atomare oder molekulare Kräfte zusammengehalten. Stoffschlüssige Verbindungen sind nicht lösbare Verbindungen, die sich nur durch Zerstörung der Verbindungsmittel und/oder der Verbindungspartner trennen lassen. Stoffschlüssig kann beispielsweise durch Kleben, Löten, Schweißen oder Vulkanisieren verbunden werden. Beispielsweise ist die Außenhülle in den Innenbehälter eingelötet oder eingeschweißt. Wie zuvor erwähnt, weist der Innenbehälter einen Basisabschnitt auf, der stirnseitig von zwei Deckelabschnitten verbunden ist. Die Außenhülle ist insbesondere mit einem der Deckelabschnitte fest verbunden. Die Außenhülle kann in einen der Deckelabschnitte des Innenbehälters eingelötet oder eingeschweißt sein.

Gemäß einer weiteren Ausführungsform ist die Außenhülle durch den Längenkompensator hindurchgeführt.

Der Längenkompensator ist insbesondere zylinderförmig oder rohrförmig. Der Längenkompensator kann rotationssymmetrisch zu der Mittelachse der Heizeinrichtung aufgebaut sein. Der Längenkompensator umläuft oder umschließt die Außenhülle umfänglich.

Gemäß einer weiteren Ausführungsform ist der Längenkompensator fest mit dem Außenbehälter verbunden, wobei die Außenhülle fest mit dem Längenkompensator verbunden ist.

Insbesondere ist der Längenkompensator stoffschlüssig mit dem Außenbehälter verbunden. Wie zuvor erwähnt, weist der Außenbehälter einen Basisabschnitt auf, der stirnseitig jeweils von einem Deckelabschnitt verschlossen ist. Der Längenkompensator ist mit einem der Deckelabschnitte fest verbunden. Insbesondere kann der Längenkompensator mit dem Außenbehälter verlötet oder verschweißt sein. Auch die Außenhülle ist stoffschlüssig mit dem Längenkompensator verbunden. Beispielsweise kann die Außenhülle mit dem Längenkompensator verschweißt oder verlötet sein. Die Außenhülle ist somit direkt mit dem Innenbehälter verbunden und über den Längenkompensator mittelbar oder indirekt mit dem Außenbehälter verbunden. Das heißt, zwischen der Außenhülle und dem Außenbehälter ist der Längenkompensator angeordnet.

Gemäß einer weiteren Ausführungsform weist der Längenkompensator einen entlang einer Längsrichtung des Speicherbehälters auseinanderfaltbaren und zusammenfaltbaren Balgabschnitt zum Längenausgleich entlang der Längsrichtung auf.

Neben dem Balgabschnitt weist der Längenkompensator einen ersten Verbindungsabschnitt, der mit dem Außenbehälter verbunden ist, und einen zweiten Verbindungsabschnitt auf, der mit der Außenhülle der Heizeinrichtung verbunden ist. Zwischen den beiden Verbindungsabschnitten ist der Balgabschnitt angeordnet. Der Balgabschnitt ist insbesondere ein Faltenbalg und kann daher auch als solcher bezeichnet werden. Der Balgabschnitt ist teleskopierbar. Der Balgabschnitt kann beispielsweise aus einem metallischen Werkstoff gefertigt sein.

Gemäß einer weiteren Ausführungsform umschließt der Längenkompensator einen Innenraum, der fluidisch mit dem Vakuumraum verbunden ist.

Das heißt insbesondere, dass der Innenraum des Längenkompensators ebenfalls mit dem in dem Vakuumraum herrschenden Vakuum beaufschlagt ist. Darunter, dass der Innenraum des Längenkompensators "fluidisch" mit dem Vakuumraum verbunden ist, ist vorliegend insbesondere zu verstehen, dass der Innenraum des Längenkompensators mit dem Vakuumraum in Fluidverbindung steht.

Erfindungsgemäß weist die Heizeinrichtung eine Heizeinheit zum Einbringen von Wärme in das Kryogen und ein Verbindungsstück auf, wobei die Heizeinheit und das Verbindungsstück innerhalb der Außenhülle angeordnet sind.

Erfindungsgemäß weist die Heizeinheit ein wie zuvor erwähntes Trägerelement auf, das ein wie zuvor erwähntes Heizelement trägt, das beispielsweise in Form eines Heizdrahts auf das Trägerelement aufgewickelt ist. Die Heizeinheit ist insbesondere vorderseitig an dem Verbindungsstück angebracht. Die Heizeinheit kann fest mit dem Verbindungsstück verbunden sein. Die Heizeinheit ist insbesondere vollständig innerhalb des Innenbehälters, insbesondere innerhalb der Flüssigkeitszone, platziert.

Gemäß einer weiteren Ausführungsform weist die Außenhülle einen Flansch auf, wobei das Verbindungsstück einen Flansch aufweist, und wobei der Flansch der Außenhülle und der Flansch des Verbindungsstücks formschlüssig miteinander verbunden sind.

Eine formschlüssige Verbindung entsteht durch das Ineinander- oder Hintergreifen von mindestens zwei Verbindungspartnern. Vorliegend können der Flansch der Außenhülle und der Flansch des Verbindungsstücks miteinander verschraubt sein. Der Flansch der Außenhülle und der Flansch des Verbindungsstücks dichten fluiddicht gegeneinander ab. Hierzu können beispielsweise sogenannte Schweißlippendichtungen vorgesehen sein.

Gemäß einer weiteren Ausführungsform ist die Heizeinheit vollständig innerhalb des Innenbehälters angeordnet, wobei das Verbindungsstück von einer Umgebung des Speicherbehälters durch den Vakuumraum bis in den Innenbehälter geführt ist.

Das Verbindungsstück umfasst den zuvor erwähnten Flansch, der an einem stabförmigen oder stangenförmigen Basisabschnitt vorgesehen ist. Dem Flansch abgewandt ist endseitig an dem Basisabschnitt ein Endabschnitt vorgesehen, welcher die Heizeinheit trägt. Mit Hilfe des Verbindungsstücks kann die Heizeinheit somit bis in den Innenbehälter eingeschoben werden.

Gemäß einer weiteren Ausführungsform weist die Außenhülle einen in die Umgebung hineinragenden Anschluss auf, der mit dem Innenraum fluidisch verbunden ist, wobei der Anschluss fluiddicht verschlossen ist.

Über den Anschluss kann beispielsweise das wärmeleitende Medium in den Innenraum der Außenhülle eingefüllt werden. Der Anschluss kann hierzu ein geeignetes Ventil aufweisen. Mit Hilfe des Anschlusses kann auch eine Drucküberwachung des Innenraums erfolgen. Hierzu kann an dem Anschluss ein Sensor, insbesondere ein Drucksensor, vorgesehen sein. Der Anschluss kann eine Vielzahl unterschiedlicher Sensoren, wie beispielsweise Drucksensoren, Temperatursensoren, optische Sensoren, Sensoren, die geeignet sind, das Kryogen und/oder das wärmeleitende Medium zu detektieren, oder dergleichen, aufweisen.

Gemäß einer weiteren Ausführungsform ist das Verbindungsstück aus Edelstahl, aus einem Verbundwerkstoff und/oder aus Kunststoff gefertigt.

Insbesondere ist das Verbindungsstück aus einem schlecht wärmeleitenden Material gefertigt. Zusätzlich weist das Verbindungsstück eine langgestreckte stabförmige Geometrie auf. Hierdurch wird die Wärmeleitung mit Hilfe des Verbindungsstücks reduziert. Beispielsweise ist das Verbindungsstück aus Polytetrafluorethylen (PTFE) gefertigt. Als Verbundwerkstoff kann beispielsweise ein faserverstärktes Kunststoffmaterial, insbesondere ein Epoxidharz, eingesetzt werden. Als Verstärkungsfasern können beispielsweise Glasfasern oder Kohlenstofffasern eingesetzt werden.

Gemäß einer weiteren Ausführungsform weist die Heizeinheit Anschlussleitungen und/oder eine Sensorleitung auf, die durch das Verbindungsstück hindurchgeführt sind.

Beispielsweise weist die Heizeinheit zwei Anschlussleitungen für das Heizelement auf. Die Anschlussleitungen sind von der Heizeinheit durch das Verbindungsstück und den Flansch des Verbindungsstücks bis in die Umgebung geführt. Die Heizeinheit kann eine oder mehrere Temperatursensoren aufweisen. Jedem Temperatursensor ist eine wie zuvor erwähnte Sensorleitung zugeordnet. Die Sensorleitung ist ebenfalls von der Heizeinheit durch das Verbindungsstück bis zu dem Flansch des Verbindungsstücks und von dort in die Umgebung geführt.

Erfindungsgemäß ist das Verbindungsstück stabförmig. Unter "stabförmig" ist vorliegend eine langgestreckte Geometrie zu verstehen. Beispielsweise weist das Verbindungsstück einen kreisrunden Querschnitt auf. Das Verbindungsstück kann hohl sein. In diesem Fall ist das Verbindungsstück ein Stab mit einem ringförmigen Querschnitt.

"Ein" ist vorliegend nicht zwangsweise als beschränkend auf genau ein Element zu verstehen. Vielmehr können auch mehrere Elemente, wie beispielsweise zwei, drei oder mehr, vorgesehen sein. Auch jedes andere hier verwendete Zählwort ist nicht dahingehend zu verstehen, dass eine genaue Beschränkung auf genau die entsprechende Anzahl von Elementen verwirklicht sein muss. Vielmehr sind zahlenmäßige Abweichungen nach oben und nach unten möglich.

Weitere mögliche Implementierungen des Speicherbehälters umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform des Speicherbehälters hinzufügen.

Weitere vorteilhafte Ausgestaltungen des Speicherbehälters sind Gegenstand der Unteransprüche sowie der im Folgenden beschriebenen Ausführungsbeispiele des Speicherbehälters. Im Weiteren wird der Speicherbehälter anhand von bevorzugten Ausführungsformen unter Bezugnahme auf die beigelegten Figuren näher erläutert.
Fig. 1 zeigt eine schematische Schnittansicht einer Ausführungsform eines Speicherbehälters;
Fig. 2 zeigt die Detailansicht II gemäß Fig. 1;
Fig. 3 zeigt eine schematische Ansicht einer Ausführungsform eines Längenkompensators für den Speicherbehälter gemäß Fig. 1; und
Fig. 4 zeigt eine schematische Ansicht einer Ausführungsform eines Verbindungsstücks für den Speicherbehälter gemäß Fig. 1.

In den Figuren sind gleiche oder funktionsgleiche Elemente mit denselben Bezugszeichen versehen worden, sofern nichts anderes angegeben ist.

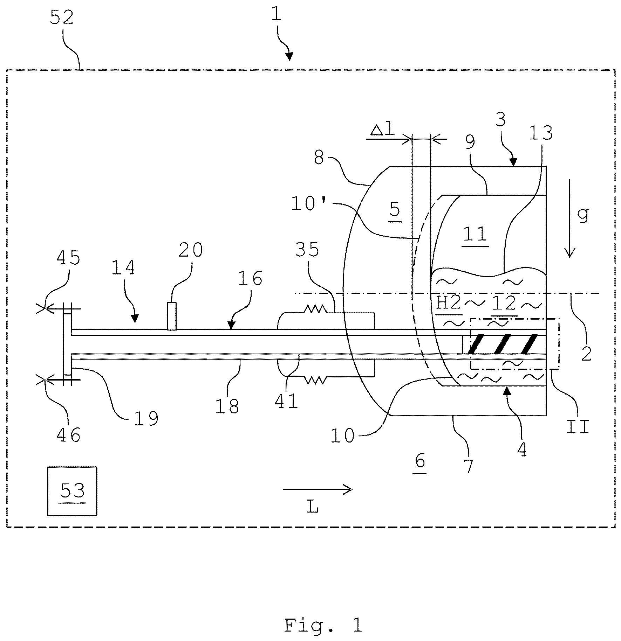

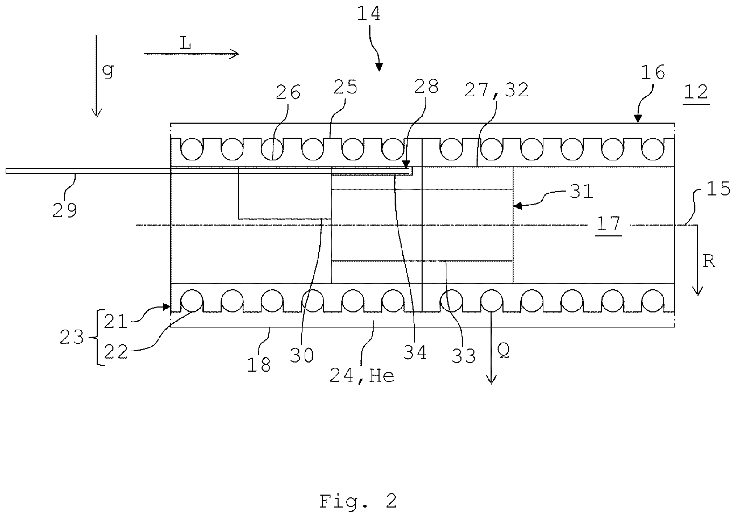

Die Fig. 1 zeigt eine schematische Schnittansicht einer Ausführungsform eines Speicherbehälters 1. Die Fig. 2 zeigt die Detailansicht II gemäß der Fig. 1. Nachfolgend wird auf die Fig. 1 und 2 gleichzeitig Bezug genommen.

Der Speicherbehälter 1 kann auch als Speichertank bezeichnet werden. Der Speicherbehälter 1 ist zur Aufnahme von flüssigem Wasserstoff H2 (Siedepunkt 1 bara: 20,268 K = -252,882 °C) geeignet. Daher kann der Speicherbehälter 1 auch als Wasserstoff-Speicherbehälter oder als Wasserstoff-Speichertank bezeichnet werden. Der Speicherbehälter 1 kann jedoch auch für andere kryogene Flüssigkeiten eingesetzt werden. Beispiele für kryogene Fluide oder Flüssigkeiten, oder kurz Kryogene, sind neben dem zuvor erwähnten flüssigen Wasserstoff H2 flüssiges Helium He (Siedepunkt 1 bara: 4,222 K = -268,928 °C), flüssiger Stickstoff N2 (Siedepunkt 1 bara: 77,35 K = -195,80 °C) oder flüssiger Sauerstoff O2 (Siedepunkt 1 bara: 90,18 K = - 182,97 °C).

Der Speicherbehälter 1 ist für einen Einsatz in oder an einem Fahrzeug (nicht gezeigt) geeignet. Das Fahrzeug kann beispielsweise ein maritimes Wasserfahrzeug, insbesondere ein Schiff, sein. Das Fahrzeug kann als maritimes Fahrzeug bezeichnet werden. Insbesondere kann das Fahrzeug eine maritime Personenfähre sein. Alternativ kann das Fahrzeug auch ein Landfahrzeug sein. Nachfolgend wird jedoch davon ausgegangen, dass das Fahrzeug ein Wasserfahrzeug ist.

Der Speicherbehälter 1 ist rotationssymmetrisch zu einer Symmetrie- oder Mittelachse 2 aufgebaut. Dabei kann die Mittelachse 2 senkrecht zu einer Schwerkraftrichtung g orientiert sein. Das heißt, der Speicherbehälter 1 ist liegend oder horizontal positioniert. Alternativ kann die Mittelachse 2 auch parallel zu der Schwerkraftrichtung g orientiert sein. Das heißt, der Speicherbehälter 1 kann auch stehend oder vertikal positioniert sein. Eine Längsrichtung L des Speicherbehälters 1 ist entlang der Mittelachse 2 orientiert. In der Orientierung der Fig. 1 verläuft die Längsrichtung L von links nach rechts.

Der Speicherbehälter 1 umfasst einen rotationssymmetrisch zu der Mittelachse aufgebauten Außenbehälter 3 sowie einen rotationssymmetrisch zu der Mittelachse 2 aufgebauten Innenbehälter 4. Der Innenbehälter 4 ist dabei vollständig innerhalb des Außenbehälters 3 angeordnet. Der Außenbehälter 3 und/oder der Innenbehälter 4 können beispielsweise aus Edelstahl gefertigt sein.

Zwischen dem Außenbehälter 3 und dem Innenbehälter 4 ist ein zumindest abschnittsweise spaltförmiger Vakuumraum 5 vorgesehen. In dem Vakuumraum 5 herrscht im Vergleich zu einer Umgebung 6 des Speicherbehälters 1 ein Unterdruck. Die Umgebung 6 kann auch als Atmosphäre bezeichnet werden. Das heißt, dass die Begriffe "Umgebung" und "Atmosphäre" beliebig gegeneinander getauscht werden können.

In dem Vakuumraum 5 kann ein Dämmungselement oder Isolierelement vorgesehen sein, das den Vakuumraum 5 zumindest teilweise oder vollständig ausfüllt. Das Isolierelement kann eine mehrlagige Isolationsschicht (Engl.: Multilayer Insulation, MLI) aufweisen oder als solche ausgebildet sein. Eine derartige mehrlagige Isolationsschicht umfasst mehrere abwechselnd angeordnete Schichten oder Lagen aus perforierter und/oder geprägter Aluminiumfolie als Reflektor und Glaspapier als Abstandshalter zwischen benachbarten Aluminiumfolien. Das Glaspapier kann perforiert und/oder gelocht sein.

Der Außenbehälter 3 umfasst einen rohr- oder zylinderförmigen Basisabschnitt 7, der rotationssymmetrisch zu der Mittelachse 2 aufgebaut ist. Der Basisabschnitt 7 ist stirnseitig beidseits jeweils mit Hilfe eines Deckelabschnitts 8 verschlossen, von denen in der Fig. 1 jedoch nur ein Deckelabschnitt 8 gezeigt ist. Der Basisabschnitt 7 kann im Querschnitt eine kreisrunde oder annähernd kreisrunde Geometrie aufweisen. Die Deckelabschnitte 8 sind gewölbt. Die Deckelabschnitte 8 sind gegensinnig gewölbt, so dass die Deckelabschnitte 8 bezüglich des Basisabschnitts 7 nach außen gewölbt sind. Der Außenbehälter 3 ist fluiddicht, insbesondere gasdicht.

Der Innenbehälter 4 umfasst, wie der Außenbehälter 3, einen rohr- oder zylinderförmigen Basisabschnitt 9, der rotationssymmetrisch zu der Mittelachse 2 aufgebaut ist. Der Basisabschnitt 9 ist beidseitig jeweils von einem Deckelabschnitt 10 verschlossen, von denen in der Fig. 1 jedoch nur ein Deckelabschnitt 10 gezeigt ist. Der Basisabschnitt 9 kann im Querschnitt eine kreisrunde oder annähernd kreisrunde Geometrie aufweisen. Die Deckelabschnitte 10 sind gewölbt. Insbesondere sind die Deckelabschnitte 10 gegensinnig gewölbt, so dass die Deckelabschnitte 10 bezüglich des Basisabschnitts 9 nach außen gewölbt sind. Der Innenbehälter 4 ist fluiddicht, insbesondere gasdicht.

In dem Innenbehälter 4 ist der flüssige Wasserstoff H2 aufgenommen. In dem Innenbehälter 4 können, solange sich der Wasserstoff H2 im Zweiphasengebiet befindet, eine Gaszone 11 mit verdampften Wasserstoff H2 und eine Flüssigkeitszone 12 mit flüssigem Wasserstoff H2 vorgesehen sein. Der Wasserstoff H2 weist also nach dem Einfüllen in den Innenbehälter 4 zwei Phasen mit unterschiedlichen Aggregatzuständen, nämlich flüssig und gasförmig, auf. Das heißt, in dem Innenbehälter 4 eine Phasengrenze 13 zwischen dem flüssigen Wasserstoff H2 und dem gasförmigen Wasserstoff H2 vorgesehen ist.

Der Speicherbehälter 1 umfasst eine Heizeinrichtung 14. Die Heizeinrichtung 14 ist ausschnittsweise in der Fig. 2 gezeigt. Die Heizeinrichtung 14 ist dazu eingerichtet, Wärme Q in den flüssigen Wasserstoff H2 einzubringen. Die Heizeinrichtung 14 wird elektrisch betrieben. Daher kann die Heizeinrichtung 14 auch als elektrische Heizeinrichtung oder als Heizer, insbesondere als elektrischer Heizer, bezeichnet werden.

Die Heizeinrichtung 14 ragt durch die Deckelabschnitte 8, 10 von der Umgebung 6 her in den Innenbehälter 4, insbesondere in die Flüssigkeitszone 12, hinein. Der in den Innenbehälter 4 hineinragende Teil der Heizeinrichtung 14 ist bevorzugt von dem flüssigen Wasserstoff H2 der Flüssigkeitszone 12 umspült.

Für den Einbau der Heizeinrichtung 14 sind folgende technische Herausforderungen zu meistern. Elektrische Leiter können nicht in dem Vakuumraum 5 eingebaut werden, da durch die schlechte Wärmeleitung innerhalb des Vakuumraums 5 eine Überhitzungsgefahr der elektrischen Leiter besteht. Eine Elektronik der Heizeinrichtung 14 kann nicht in dem Vakuumraum 5 eingebaut werden, da auch hier eine Überhitzungsgefahr vorhanden ist.

Durch eine Minderung der Isolierwirkung zu dem Innenbehälter 4 durch ein Einführen der Heizeinrichtung 14 kann die Isolierung des Innenbehälters 4 beschädigt werden und dadurch eine erhöhter Wärmeeintrag von der Umgebung 6 zu dem Innenbehälter 4 erfolgen. Es kann zu Konvektion durch die Entstehung einer Gaswalze zwischen kaltem Innenbehälter 4 und warmer Umgebung 6 kommen.

Es ist ein Ausgleich von Längenänderungen zwischen dem Innenbehälter 4 und dem Außenbehälter 3 bei einem Anwärmen beziehungsweise bei einem Abkühlen des Innenbehälters 4 beziehungsweise durch Temperaturänderung in der Umgebung 6, falls der Innenbehälter 4 und der Außenbehälter 3 fest miteinander verbunden sind, wünschenswert. Die Heizeinrichtung 14 soll ohne einen Vakuumbruch austauschbar sein. Diese Herausforderungen werden mit der Heizeinrichtung 14 gelöst.

Die Heizeinrichtung 14 ist rotationssymmetrisch zu einer Symmetrie- oder Mittelachse 15 aufgebaut. Die Mittelachse 15 kann parallel zu der Mittelachse 2 orientiert sein. Dabei ist die Mittelachse 15 bezüglich der Schwerkraftrichtung g betrachtet unterhalb der Mittelachse 2 platziert. Der Heizeinrichtung 14 ist ferner eine Radialrichtung R zugeordnet. Die Radialrichtung R ist senkrecht zu der Mittelachse 15 und von dieser weg orientiert.

Die Heizeinrichtung 14 umfasst eine fluiddichte Außenhülle 16. Die Außenhülle 16 ist rohrförmig und kann daher auch als Außenrohr bezeichnet werden. Die Außenhülle 16 ist bevorzugt aus einem metallischen Werkstoff, bevorzugt aus Edelstahl, gefertigt sein. Die Außenhülle 16 ist bevorzugt aus einem gut wärmeleitenden Material gefertigt.

Die Außenhülle 16 ist durch die beiden Deckelabschnitte 8, 10 bis in die Flüssigkeitszone 12 geführt. Das heißt, dass die Außenhülle 16 teilweise in die Umgebung 6 und teilweise in den Innenbehälter 4, insbesondere in die Flüssigkeitszone 12, hineinragt. Die Außenhülle 16 kann in den Deckelabschnitt 10 des Innenbehälters 4 eingelötet oder eingeschweißt sein. Mit dem Deckelabschnitt 8 des Außenbehälters 3 ist die Außenhülle 16 nicht verbunden. Die Außenhülle 16 kann auch aus einer Kupferlegierung, einer Aluminiumlegierung, Glas, Glaskeramik oder Keramik gefertigt sein.

Die Außenhülle 16 ist rotationssymmetrisch zu der Mittelachse 15 aufgebaut. Die Außenhülle 16 kann im Querschnitt kreisrund sein. Abweichend davon kann die Außenhülle 16 im Querschnitt auch leicht oval oder elliptisch sein. Die Außenhülle 16 ist umfänglich geschlossen. Die Außenhülle 16 umschließt einen Innenraum 17. Der Innenraum 17 kann als Innenraum der Außenhülle 16 oder als Innenraum der Heizeinrichtung 14 bezeichnet werden. Der Innenraum 17 kann auch als Heizungsinnenraum bezeichnet werden. Der Innenraum 17 ist mit einem wärmeleitenden Medium gefüllt. Das wärmeleitende Medium ist bevorzugt ein Gas, insbesondere Helium He. Die Außenhülle 16 ist fluiddicht.

Die Außenhülle 16 umfasst einen rohrförmigen Basisabschnitt 18, der rotationsymmetrisch zu der Mittelachse 15 aufgebaut ist. Neben dem Basisabschnitt 18 umfasst die Außenhülle 16 einen Flansch 19, der in die Umgebung 6 hineinragt. Dem Flansch 19 abgewandt weist die Außenhülle 16 einen Deckelabschnitt (nicht gezeigt) auf, der die Außenhülle 16 fluiddicht verschließt. Dieser Deckelabschnitt ist innerhalb des Innenbehälters 4 platziert.

Außerhalb des Außenbehälters 3 weist die Außenhülle 16 einen Anschluss 20 auf, der fluiddicht verschlossen werden kann. Mit Hilfe des Anschlusses 20 kann beispielsweise der Innenraum 17 mit Helium He befüllt werden. Ferner kann der Anschluss 20 auch zum Überwachen der Heizeinrichtung 14 eingesetzt werden. Beispielsweise kann über den Anschluss 20 ein Druckabfall oder Druckanstieg in dem Innenraum 17 detektiert werden. Der Anschluss 20 ist außerhalb des Speicherbehälters 1 in der Umgebung 6 platziert.

Neben der Außenhülle 16 weist die Heizeinrichtung 14 ein rohrförmiges Trägerelement 21 auf, das ein drahtförmiges Heizelement 22 trägt. Das Trägerelement 21 kann auch als Trägerrohr bezeichnet werden. Das Trägerelement 21 ist vorzugsweise rotationssymmetrisch zu der Mittelachse 15 aufgebaut. Das Trägerelement 21 ist aus einem gut wärmeleitendem Material gefertigt. Beispielsweise ist das Trägerelement 21 aus einem metallischen Werkstoff, insbesondere aus einer Kupferlegierung oder aus einer Aluminiumlegierung, gefertigt. Das Trägerelement 21 kann jedoch auch aus Glas, einer Glaskeramik oder einer Keramik gefertigt sein. Das Heizelement 22 und das Trägerelement 21 bilden zusammen eine Heizeinheit 23 der Heizeinrichtung 14.

Das Trägerelement 21 kann ein einstückiges, insbesondere ein materialeinstückiges, Bauteil sein. "Einstückig" oder "einteilig" heißt dabei, dass das Trägerelement 21 ein einziges Bauteil ist, das nicht aus mehreren Unterbauteilen oder Komponenten zusammengesetzt ist. "Materialeinstückig" bedeutet vorliegend insbesondere, dass das Trägerelement 21 durchgehend aus demselben Material gefertigt ist. Alternativ kann das Trägerelement 21 auch mehrteilig oder mehrstückig sein. In diesem Fall ist das Trägerelement 21 aus mehreren Unterbauteilen oder Komponenten aufgebaut.

Das Trägerelement 21 erstreckt sich in der Längsrichtung L in den Innenbehälter 4 hinein. Dabei ist das Trägerelement 21 vorzugsweise vollständig innerhalb des Innenbehälters 4 angeordnet. Das Trägerelement 21 ist in der Außenhülle 16 aufgenommen. Das heißt insbesondere, dass das Trägerelement 21 in dem Innenraum 17 platziert ist. Vorzugsweise ist das Trägerelement 21 bezüglich der Mittelachse 15 mittig platziert, so dass zwischen dem Trägerelement 21 und dem Basisabschnitt 18 ein mit dem Helium He gefüllter Spalt 24 vorgesehen ist, der vollständig um das Trägerelement 21 herumläuft.

Der Spalt 24 kann eine Spaltbreite von 0,5 bis 1 Millimeter aufweisen. Die Spaltbreite wird so klein wie möglich und so groß wie nötig gewählt, um das Trägerelement 21 mit dem Heizelement 22 in die Außenhülle 16 einschieben zu können. Der Spalt 24 ist Teil des Innenraums 17. Der Spalt 24 ist optional. Alternativ kann das Trägerelement 21 innenseitig an der Außenhülle 16 anliegen. Hierdurch kann die Wärmeübertragung verbessert werden.

Eine zylinderförmige Außenseite 25 des Trägerelements 21 weist zu der Außenhülle 16 hin. Der Spalt 24 ist zwischen der Außenseite 25 und der Außenhülle 16 vorgesehen. An der Außenseite 25 ist eine schneckenförmig oder schraubenförmig um das Trägerelement 21 umlaufende Nut 26 vorgesehen, die das Heizelement 22 aufnimmt. Das Heizelement 22 ist bevorzugt ein Heizdraht, der auf das Trägerelement 21 aufgewickelt ist.

Für den Fall, dass das Trägerelement 21 aus einem elektrisch leitenden Werkstoff gefertigt ist, kann das Heizelement 22 eine elektrische Isolierung aufweisen, die das Heizelement 22 gegenüber dem Trägerelement 21 elektrisch isoliert. Beispielsweise kann der zuvor erwähnte Heizdraht in Magnesiumoxidpulver eingebettet sein, welches von einer nicht stromführenden metallischen Hülle, beispielsweise einer Edelstahlhülle, umkapselt ist. Vorliegend kann unter dem Begriff "Heizelement" demgemäß ein metallisch-mineralisolierter Heizdraht verstanden werden. Die Nut 26 ist optional. Das Heizelement 22 kann auch ohne die Nut 26 auf das Trägerelement 21 aufgewickelt sein.

Eine zylinderförmige Innenseite 27 des Trägerelements 21 weist von der Außenseite 25 weg. Die Innenseite 27 kann durch eine mittig durch das Trägerelement 21 hindurchgeführte Bohrung verwirklicht werden. Die Heizeinrichtung 14 weist zumindest einen Temperatursensor 28 mit einer Sensorleitung 29 auf. Mit Hilfe des Temperatursensors 28 kann die Temperatur der Heizeinrichtung 14 erfasst werden. Der Temperatursensor 28 umfasst eine Befestigungslasche 30. Alternativ zu der Befestigungslasche 30 ist es auch möglich, andere Arten der Befestigung, beispielsweise in der Form von Klemmen, Schrauben, Löten oder Stecken, vorzusehen.

Der Temperatursensor 28 ist mit Hilfe eines Befestigungselements 31 gehalten oder befestigt. Das Befestigungselement 31 ist aus einem gut wärmeleitenden Material, beispielsweise aus einer Kupferlegierung oder einer Aluminiumlegierung, gefertigt. Das Befestigungselement 31 ist rohrförmig. Das Befestigungselement 31 ist innerhalb des Trägerelements 21 angeordnet. Beispielsweise ist das Befestigungselement 31 in das Trägerelement 21 eingepresst. Das Befestigungselement 31 kann ein einstückiges, insbesondere ein materialeinstückiges, Bauteil sein. Alternativ kann das Befestigungselement 31 auch mehrteilig oder mehrstückig sein.

Das Befestigungselement 31 ist rotationssymmetrisch zu der Mittelachse 15 aufgebaut. Das Befestigungselement 31 umfasst eine zylinderförmige Außenseite 32, die an der Innenseite 27 des Trägerelements 21 anliegt. Das Befestigungselement 31 umfasst ferner eine zylinderförmige Innenseite 33, die beispielsweise durch eine mittig an dem Befestigungselement 31 vorgesehene Bohrung verwirklicht ist. Das Helium He kann also durch das Befestigungselement 31 hindurchströmen.

Für jeden Temperatursensor 28 weist das Befestigungselement 31 eine Aufnahmebohrung 34 auf, in die der jeweilige Temperatursensor 28 eingesteckt ist. Die Aufnahmebohrung 34 ist stirnseitig an dem Befestigungselement 31 vorgesehen und erstreckt sich entlang der Längsrichtung L in das Befestigungselement 31 hinein. Die Aufnahmebohrung 34 verläuft parallel zu der Mittelachse 15. Die Aufnahmebohrung 34 kann eine Sacklochbohrung sein. Entlang der Radialrichtung R betrachtet, liegt die Aufnahmebohrung 34 unmittelbar unterhalb der Außenseite 32.

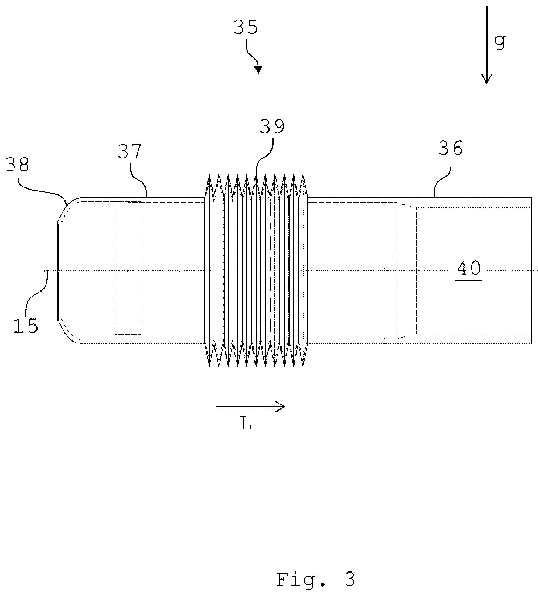

Die Heizeinrichtung 14 umfasst ferner einen Längenkompensator 35. Die Fig. 3 zeigt eine schematische Ansicht einer Ausführungsform eines derartigen Längenkompensators 35.

Der Längenkompensator 35 ermöglicht einen Längenausgleich entlang der Längsrichtung L. Der Längenkompensator 35 ist rotationssymmetrisch zu der Mittelachse 15 aufgebaut. Die Außenhülle 16 ist durch den Längenkompensator 35 hindurchgeführt.

Der Längenkompensator 35 weist einen zylinderförmigen ersten Verbindungsabschnitt 36 auf, der fest mit dem Deckelabschnitt 8 des Außenbehälters 3 verbunden ist. Beispielsweise ist der erste Verbindungsabschnitt 36 in den Deckelabschnitt 8 eingelötet oder eingeschweißt. Neben dem ersten Verbindungsabschnitt 36 ist ein zweiter Verbindungsabschnitt 37 vorgesehen. Der zweite Verbindungsabschnitt 37 umfasst eine um die Mittelachse 15 umlaufende Verrundung 38. Mit Hilfe der Verrundung 38 ist der zweite Verbindungsabschnitt 37 fest mit dem Basisabschnitt 18 der Außenhülle 16 verbunden, beispielsweise mit dieser verlötet oder verschweißt.

Zwischen dem ersten Verbindungsabschnitt 36 und dem zweiten Verbindungsabschnitt 37 ist ein Balgabschnitt 39 angeordnet. Der Balgabschnitt 39 ist entlang der Längsrichtung L zusammenschiebbar und auseinanderziehbar, um einen Längenausgleich entlang der Längsrichtung L zu ermöglichen. Der Längenkompensator 35 ist vorzugsweise ein einstückiges, insbesondere ein materialeinstückiges, Bauteil. Der Längenkompensator 35 kann aus Metall gefertigt sein. Der Längenkompensator 35 umschließt einen Innenraum 40 auf, der mit dem Vakuumraum 5 fluidisch verbunden ist.

Nun zurückkehrend zu der Fig. 1 schrumpft der Innenbehälter 4, der an einem dem Deckelabschnitt 10 abgewandten Endabschnitt fest mit dem Außenbehälter 3 verbunden ist, bei einem Einfüllen des flüssigen Wasserstoffs H2 wärmebedingt entlang der Längsrichtung L. In der Fig. 1 ist eine Ausgangsposition des Deckelabschnitts 10, in welcher der Innenbehälter 4 noch nicht mit dem flüssigen Wasserstoff H2 befüllt ist, mit einer gestrichelten Linie und mit dem Bezugszeichen 10' bezeichnet.

Wird der Innenbehälter 4 nun mit dem flüssigen Wasserstoff H2 befüllt, bewegt sich der Deckelabschnitt 10 in der Orientierung der Fig. 1 um eine Längenänderung Δl nach rechts. Die Längenänderung Δl kann beispielsweise mehrere Millimeter betragen. Diese Längenänderung Δl kann durch den Längenkompensator 35, insbesondere durch den Balgabschnitt 39, kompensiert werden. Unter "kompensieren" ist vorliegend zu verstehen, dass der Balgabschnitt 39 zusammengeschoben oder auseinandergezogen wird, so dass weder in die Außenhülle 16 noch in den Innenbehälter 4 oder in den Außenbehälter 3 wärmebedingte Spannungen eingebracht werden.

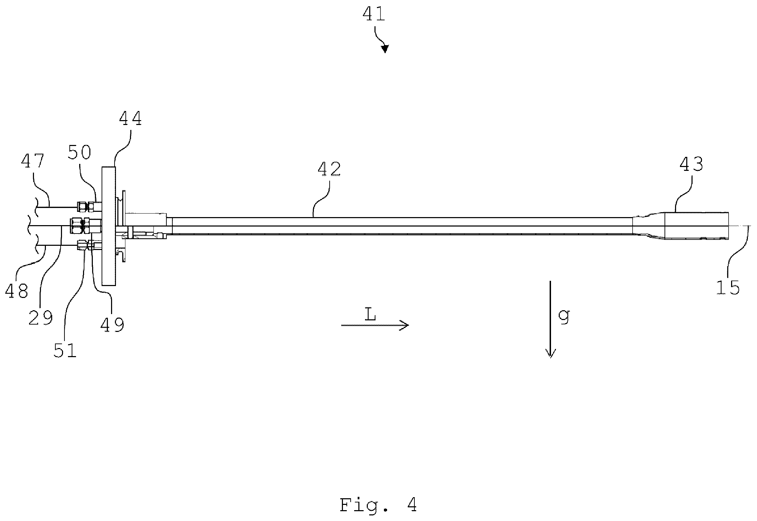

Die Heizeinrichtung 14 umfasst ferner ein Verbindungsstück 41. Die Fig. 4 zeigt eine schematische Ansicht einer Ausführungsform eines derartigen Verbindungsstücks 41.

Das Verbindungsstück 41 ist in der Außenhülle 16 aufgenommen. Das Verbindungsstück 41 umfasst einen sich entlang der Längsrichtung L erstreckenden Basisabschnitt 42. An dem Basisabschnitt 42 schließt sich ein Endabschnitt 43 an. Mit Hilfe des Endabschnitts 43 kann das Verbindungsstück 41 mit der Heizeinheit 23 verbunden sein. Das Verbindungsstück 41 trägt somit die Heizeinheit 23.

Dem Endabschnitt 43 abgewandt weist das Verbindungsstück 41 einen Flansch 44 auf. Der Flansch 44 ist mit Hilfe von Verbindungselementen 45, 46 (Fig. 1) mit dem Flansch 19 der Außenhülle 16 verbunden. Die Verbindungselemente 45, 46 können Schrauben sein. Mit Hilfe der Verbindungselemente 45, 46 können die Flansche 19, 44 einfach miteinander verbunden und wieder voneinander gelöst werden. Um die Flansche 19, 44 gegeneinander abzudichten, können Schweißlippendichtungen vorgesehen sein.

Durch das Verbindungsstück 41 sind die Sensorleitung 29 sowie Anschlussleitungen 47, 48 des Heizelements 22 hindurchgeführt. Hierzu sind geeignete Durchführungen 49, 50, 51 an dem Flansch 44 vorgesehen. Das Verbindungsstück 41 ist bevorzugt aus Edelstahl gefertigt. Das Verbindungsstück 41 kann jedoch auch aus einem Kunststoffmaterial gefertigt sein.

Nun zurückkehrend zu der Fig. 1 kann der Speicherbehälter 1 Teil eines Kryogenversorgungssystems 52 sein, das geeignet ist, einem Verbraucher 53, der vorliegend bevorzugt eine Brennstoffzelle ist, gasförmigen Wasserstoff H2 mit einem definierten Versorgungsdruck und einer definierten Versorgungstemperatur bereitzustellen. Beispielsweise wird der Wasserstoff H2 dem Verbraucher 53 gasförmig mit einem Versorgungsdruck von beispielsweise 1 bis 2,5 bara und einer Temperatur von beispielsweise 0 bis +70 °C, insbesondere von +10 bis +25 °C, zugeführt. Der Versorgungsdruck kann jedoch auch bis zu 6 bara betragen.

Das Kryogenversorgungssystem 52 kann als Wasserstoffversorgungssystem bezeichnet werden. Das Kryogenversorgungssystem 52 kann neben dem Speicherbehälter 1 einen Verdampfer (nicht gezeigt) aufweisen, der geeignet ist, den flüssigen Wasserstoff H2 zu verdampfen und dem Verbraucher 53 zuzuführen.

Das Design der Heizeinrichtung 14 ermöglicht die Aufrechterhaltung der Isolierwirkung zum Innenbehälter 4 durch das Einsetzen von Materialien mit einer geringen Wärmeleitfähigkeit zwischen der Umgebung 6 und dem Innenbehälter 4. Beispielsweise kann das Verbindungsstück 41 hierzu aus Edelstahl oder einem Kunststoffmaterial gefertigt werden. Es ermöglicht eine Abgrenzung der Anschlussleitungen 47, 48 und der damit einhergehenden Elektronik von dem Vakuumraum 5 durch eine zusätzliche Barriere in Form der Außenhülle 16 zwischen den Anschlussleitungen 47, 48 und dem Vakuumraum 5.

Das Abführen der durch den Widerstand entstehenden Wärme in den elektrischen Anschlussleitungen 47, 48 erfolgt durch geeignete Materialwahl des Verbindungstücks 41 zwischen der Heizeinheit 23 und dem Flansch 44. Dabei muss einerseits sichergestellt werden, dass das Material die entstehende Wärme in den Anschlussleitungen 47, 48 abführt und andererseits die Kälteverluste zu der Umgebung 6 so gering wie möglich ausfallen.

Aufgrund möglicher Kälteverluste ist es vorteilhaft, wenn das Verbindungsstück 41 langgestreckt ausgeführt wird, damit die Isolierwirkung möglichst aufrecht erhalten bleibt. Als Material für das Verbindungsstück 41 eignet sich Edelstahl, da dieses zu einer vergleichsweise geringen Wärmeleitung nach außen führt, die jedoch ausreicht, um Wärme von den elektrischen Anschlussleitungen 47, 48 abzuführen. Es können für das Verbindungsstück 41 jedoch auch andere schlecht wärmeleitende Materialien, wie beispielsweise Kunststoffe oder Keramiken, eingesetzt werden.

Es ist eine Unterdrückung der Konvektionswalze zwischen kaltem Innenbehälter 4 und warmer Umgebung 6 und der damit verbundenen Kälteverluste im Innenbehälter 4 durch ein Füllen des Spalts 24 mit einem Isoliermaterial, beispielsweise in Form von Mineralwolle, möglich.

Der Längenkompensator 35 ermöglicht einen Ausgleich der entstehenden Längenänderung Δl zwischen dem Innenbehälter 4 und dem Außenbehälter 3, die durch ein unterschiedliches Anwärmen beziehungsweise Abkühlen des Innenbehälters 4 und des Außenbehälters 3 entstehen kann. Ein Ausgleich der Längenänderung Δl kann auch durch einen zusätzlichen Axialstopp erfolgen, der in die Heizeinrichtung 14 integriert werden kann.

Die Heizeinrichtung 14 ist so konzipiert, dass ein leichter Austausch der Heizeinheit 23 ermöglicht wird. Hierzu ist die Flanschverbindung zwischen den Flanschen 19, 44 vorgesehen. Um eine Gasdichtheit von 100% erreichen zu können, werden an den Flanschen 19, 44 Schweißlippendichtungen eingesetzt. Andere Dichtungen sind jedoch auch möglich.

Für die Füllung des Spalts 24 der Heizeinrichtung 14 können unterschiedliche wärmeleitende Medien, wie beispielsweise Helium He, eingesetzt werden. Eine Raumgröße zwischen der Heizeinrichtung 14 und dem Vakuumraum 5 ist variabel und an die Geometrie der Heizeinrichtung 14 anpassbar.

Es können unterschiedliche Isolierungen zwischen der Heizeinrichtung 14 und der Umgebung 6 eingesetzt werden. Die Außenhülle 16 bildet einen eigenständiger Raum zwischen dem Innenbehälter 4 und dem Außenbehälter 3. Es besteht keine fluidische Verbindung zu dem Innenbehälter 4. An den Flanschen 19, 44 sind unterschiedliche Flanschdichtungen einsetzbar.

Obwohl die vorliegende Erfindung anhand von Ausführungsbeispielen beschrieben wurde, ist sie vielfältig modifizierbar.

### Verwendete Bezugszeichen

- 1: Speicherbehälter
- 2: Mittelachse
- 3: Außenbehälter
- 4: Innenbehälter
- 5: Vakuumraum
- 6: Umgebung
- 7: Basisabschnitt
- 8: Deckelabschnitt
- 9: Basisabschnitt
- 10: Deckelabschnitt
- 10': Deckelabschnitt
- 11: Gaszone
- 12: Flüssigkeitszone
- 13: Phasengrenze
- 14: Heizeinrichtung
- 15: Mittelachse
- 16: Außenhülle
- 17: Innenraum
- 18: Basisabschnitt
- 19: Flansch
- 20: Anschluss
- 21: Trägerelement
- 22: Heizelement
- 23: Heizeinheit
- 24: Spalt
- 25: Außenseite
- 26: Nut
- 27: Innenseite
- 28: Temperatursensor
- 29: Sensorleitung
- 30: Befestigungslasche
- 31: Befestigungselement
- 32: Außenseite
- 33: Innenseite
- 34: Aufnahmebohrung
- 35: Längenkompensator
- 36: Verbindungsabschnitt
- 37: Verbindungsabschnitt
- 38: Verrundung
- 39: Balgabschnitt
- 40: Innenraum
- 41: Verbindungsstück
- 42: Basisabschnitt
- 43: Endabschnitt
- 44: Flansch
- 45: Verbindungselement
- 46: Verbindungselement
- 47: Anschlussleitung
- 48: Anschlussleitung
- 49: Durchführung
- 50: Durchführung
- 51: Durchführung
- 52: Kryogenversorgungssystem
- 53: Verbraucher

- g: Schwerkraftrichtung
- He: Helium/Medium
- H2: Wasserstoff/Kryogen
- L: Längsrichtung
- Q: Wärme
- R: Radialrichtung
- Δl: Längenänderung

## Patentansprüche

1. Speicherbehälter (1) zum Speichern eines Kryogens (H2), mit einem Innenbehälter (4) zum Aufnehmen des Kryogens (H2), einem Außenbehälter (3), der den Innenbehälter (4) umschließt, einem Vakuumraum (5), der zwischen dem Innenbehälter (4) und dem Außenbehälter (3) vorgesehen ist, und einer Heizeinrichtung (14) zum Druckaufbau innerhalb des Innenbehälters (4) durch Einbringen von Wärme (Q) in das Kryogen (H2), wobei die Heizeinrichtung (14) eine Außenhülle (16) aufweist, die durch den Vakuumraum (5) bis in den Innenbehälter (4) geführt ist, und wobei ein von der Außenhülle (16) umschlossener Innenraum (17) der Heizeinrichtung (14) fluidisch von dem Vakuumraum (5) getrennt ist, und wobei die Heizeinrichtung (14) eine Heizeinheit (23) zum Einbringen der Wärme (Q) in das Kryogen (H2) aufweist, **dadurch gekennzeichnet, dass**
- die Heizeinrichtung (14) einen Längenkompensator (35) aufweist, der dazu eingerichtet ist, eine wärmebedingte Längenänderung (ΔI) des Innenbehälters (4) zu kompensieren,
- die Heizeinrichtung (14) ein stabförmiges Verbindungsstück (41) aufweist, wobei die Heizeinheit (23) und das Verbindungsstück (41) innerhalb der Außenhülle (16) angeordnet sind, wobei das Verbindungsstück (41) an einem Endabschnitt (43) des Verbindungsstücks die Heizeinheit (23) trägt, und wobei die Heizeinheit (23) ein Heizelement (22) umfasst, das von einem Trägerelement (21) getragen wird.

2. Speicherbehälter (1) nach Anspruch 1, wobei der Innenraum (17) mit einem wärmeleitenden Medium (He) gefüllt ist.

3. Speicherbehälter nach Anspruch 1 oder 2, wobei die Außenhülle (16) fest mit dem Innenbehälter (4) verbunden ist.

4. Speicherbehälter nach einem der Ansprüche 1 - 3, wobei die Außenhülle (16) durch den Längenkompensator (35) hindurchgeführt ist.

5. Speicherbehälter nach einem der Ansprüche 1 - 4, wobei der Längenkompensator (35) fest mit dem Außenbehälter (3) verbunden ist, und wobei die Außenhülle (16) fest mit dem Längenkompensator (35) verbunden ist.

6. Speicherbehälter nach einem der Ansprüche 1 - 5, wobei der Längenkompensator (35) einen entlang einer Längsrichtung (L) des Speicherbehälters (1) auseinanderfaltbaren und zusammenfaltbaren Balgabschnitt (39) zum Längenausgleich entlang der Längsrichtung (L) aufweist.

7. Speicherbehälter nach einem der Ansprüche 1 - 6, wobei der Längenkompensator (35) einen Innenraum (40) umschließt, der fluidisch mit dem Vakuumraum (5) verbunden ist.

8. Speicherbehälter nach einem der Ansprüche 1 - 7, wobei die Außenhülle (16) einen Flansch (19) aufweist, wobei das Verbindungsstück (41) einen Flansch (44) aufweist, und wobei der Flansch (19) der Außenhülle (16) und der Flansch (44) des Verbindungsstücks (41) formschlüssig miteinander verbunden sind.

9. Speicherbehälter nach einem der Ansprüche 1 - 8, wobei die Heizeinheit (23) vollständig innerhalb des Innenbehälters (4) angeordnet ist, und wobei das Verbindungsstück (41) von einer Umgebung (6) des Speicherbehälters (1) durch den Vakuumraum (5) bis in den Innenbehälter (4) geführt ist.

10. Speicherbehälter nach einem der Ansprüche 1 - 9, wobei die Außenhülle (16) einen in die Umgebung (6) hineinragenden Anschluss (20) aufweist, der mit dem Innenraum (17) fluidisch verbunden ist, und wobei der Anschluss (20) fluiddicht verschlossen ist.

11. Speicherbehälter nach einem der Ansprüche 1 - 10, wobei das Verbindungsstück (41) aus Edelstahl, aus einem Verbundwerkstoff und/oder aus Kunststoff gefertigt ist.

12. Speicherbehälter nach einem der Ansprüche 1 - 11, wobei die Heizeinheit (23) Anschlussleitungen (47, 48) und/oder eine Sensorleitung (29) aufweist, die durch das Verbindungsstück (41) hindurchgeführt sind.

## Claims

1. Storage container (1) for storing a cryogen (H2), comprising an inner container (4) for receiving the cryogen (H2), an outer container (3) enclosing the inner container (4), a vacuum chamber (5) provided between the inner container (4) and the outer container (3), and a heating device (14) for building up pressure within the inner container (4) by introducing heat (Q) into the cryogen (H2), the heating device (14) having an outer shell (16) extending through the vacuum chamber (5) into the inner container (4), and an interior (17) of the heating device (14), which interior is surrounded by the outer shell (16), being fluidically separated from the vacuum chamber (5), and the heating device (14) having a heating unit (23) for introducing the heat (Q) into the cryogen (H2),
**characterized in that**
- the heating device (14) has a length compensator (35) which is designed to compensate for a heat-induced change in length (Δl) of the inner container (4),
- the heating device (14) has a rod-shaped connecting piece (41), the heating unit (23) and the connecting piece (41) being arranged within the outer shell (16), the connecting piece (41) supporting the heating unit (23) at an end portion (43) of the connecting piece, and the heating unit (23) comprising a heating element (22) which is supported by a support element (21).

2. Storage container (1) according to claim 1, wherein the interior (17) is filled with a heat-conducting medium (He).

3. Storage container according to claim 1 or 2, wherein the outer shell (16) is rigidly connected to the inner container (4).

4. Storage container according to any of claims 1-3, wherein the outer shell (16) passes through the length compensator (35).

5. Storage container according to any of claims 1-4, wherein the length compensator (35) is rigidly connected to the outer container (3), and wherein the outer shell (16) is rigidly connected to the length compensator (35).

6. Storage container according to any of claims 1-5, wherein the length compensator (35) has a bellows portion (39) that can be unfolded and folded up in a longitudinal direction (L) of the storage container (1) for length compensation in the longitudinal direction (L).

7. Storage container according to any of claims 1-6, wherein the length compensator (35) encloses an interior (40) which is fluidically connected to the vacuum chamber (5).

8. Storage container according to any of claims 1-7, wherein the outer shell (16) has a flange (19), wherein the connecting piece (41) has a flange (44), and wherein the flange (19) of the outer shell (16) and the flange (44) of the connecting piece (41) are interlockingly connected to one another.

9. Storage container according to any of claims 1-8, wherein the heating unit (23) is arranged completely within the inner container (4), and wherein the connecting piece (41) extends from the surroundings (6) of the storage container (1) through the vacuum chamber (5) into the inner container (4).

10. Storage container according to any of claims 1-9, wherein the outer shell (16) has a connector (20) which projects into the surroundings (6) and is fluidically connected to the interior (17), and wherein the connector (20) is fluid-tightly closed.

11. Storage container according to any of claims 1-10, wherein the connecting piece (41) is made of stainless steel, of a composite material, and/or of plastics material.

12. Storage container according to any of claims 1-11, wherein the heating unit (23) has connector lines (47, 48) and/or a sensor line (29) which pass through the connecting piece (41).

## Revendications

1. Récipient de stockage (1) pour le stockage d'un cryogène (H2), comportant un récipient intérieur (4) pour la réception du cryogène (H2), un récipient extérieur (3), lequel entoure le récipient intérieur (4), un espace sous vide (5) prévu entre le récipient intérieur (4) et le récipient extérieur (3), et un dispositif de chauffage (14) pour la montée en pression à l'intérieur du récipient intérieur (4) par apport de chaleur (Q) au cryogène (H2), dans lequel le dispositif de chauffage (14) présente une enveloppe extérieure (16) qui est guidée à travers l'espace sous vide (5) jusque dans le récipient intérieur (4), et dans lequel un espace intérieur (17) du dispositif de chauffage (14), entouré par l'enveloppe extérieure (16), est séparé de manière fluidique de l'espace sous vide (5), et dans lequel le dispositif de chauffage (14) présente une unité de chauffage (23) pour l'introduction de la chaleur (Q) dans le cryogène (H2),
**caractérisé en ce que**
- le dispositif de chauffage (14) présente un compensateur de longueur (35) conçu pour compenser une variation de longueur (Δl) du récipient intérieur (4) due à la chaleur,
- le dispositif de chauffage (14) présente une pièce de raccordement (41) en forme de tige, dans lequel l'unité de chauffage (23) et la pièce de raccordement (41) sont disposées à l'intérieur de l'enveloppe extérieure (16), dans lequel la pièce de raccordement (41) supporte l'unité de chauffage (23) au niveau d'une section d'extrémité (43) de la pièce de raccordement, et dans lequel l'unité de chauffage (23) comprend un élément chauffant (22) supporté par un élément de support (21).

2. Récipient de stockage (1) selon la revendication 1, dans lequel l'espace intérieur (17) est rempli d'un milieu (He) conducteur de chaleur.

3. Récipient de stockage selon la revendication 1 ou 2, dans lequel l'enveloppe extérieure (16) est reliée de manière fixe au récipient intérieur (4).

4. Récipient de stockage selon l'une des revendications 1 à 3, dans lequel l'enveloppe extérieure (16) traverse le compensateur de longueur (35).

5. Récipient de stockage selon l'une des revendications 1 à 4, dans lequel le compensateur de longueur (35) est relié de manière fixe au récipient extérieur (3), et dans lequel l'enveloppe extérieure (16) est reliée de manière fixe au compensateur de longueur (35).

6. Récipient de stockage selon l'une des revendications 1 à 5, dans lequel le compensateur de longueur (35) présente une section formant soufflet (39) pouvant être déployée et repliée le long d'une direction longitudinale (L) du récipient de stockage (1) pour la compensation de longueur le long de la direction longitudinale (L).

7. Récipient de stockage selon l'une des revendications 1 à 6, dans lequel le compensateur de longueur (35) entoure un espace intérieur (40) qui est raccordé de manière fluidique à l'espace sous vide (5).

8. Récipient de stockage selon l'une des revendications 1 à 7, dans lequel l'enveloppe extérieure (16) présente une bride (19), dans lequel la pièce de raccordement (41) présente une bride (44), et dans lequel la bride (19) de l'enveloppe extérieure (16) et la bride (44) de la pièce de raccordement (41) sont reliées l'une à l'autre par complémentarité de forme.

9. Récipient de stockage selon l'une des revendications 1 à 8, dans lequel l'unité de chauffage (23) est disposée entièrement à l'intérieur du récipient intérieur (4), et dans lequel la pièce de raccordement (41) est guidée d'une zone environnante (6) du récipient de stockage (1) à travers l'espace sous vide (5) jusque dans le récipient intérieur (4).

10. Récipient de stockage selon l'une des revendications 1 à 9, dans lequel l'enveloppe extérieure (16) présente un raccord (20) faisant saillie dans la zone environnante (6) qui est raccordé de manière fluidique à l'espace intérieur (17), et dans lequel le raccord (20) est fermé de manière étanche aux fluides.

11. Récipient de stockage selon l'une des revendications 1 à 10, dans lequel la pièce de raccordement (41) est fabriquée en acier inoxydable, en un matériau composite et/ou en matière plastique.

12. Récipient de stockage selon l'une des revendications 1 à 11, dans lequel l'unité de chauffage (23) présente des conduites de raccord (47, 48) et/ou une conduite de détection (29) qui traversent la pièce de raccordement (41).
